# EUROPÄISCHE PATENTSCHRIFT

(11) **EP 0 667 364 B1**
(45) Veröffentlichungstag und Bekanntmachung des Hinweises auf die Patenterteilung: **08.03.2000**
(21) Anmeldenummer: 95100735.0
(22) Anmeldetag: 20.01.1995
(51) Int. Cl.: C08G 63/692, C08G 63/695, C08G 77/445, C08G 79/04, D06M 15/507

(54) **Phosphin- bzw. phosphonsäuregruppen- und siloxangruppenhaltige Polykondensate**
Polycondensates containing phosphinic acid or phosphonic acid groups - and siloxane groups
Polycondensates contenant des groupes d'acide phosphinique ou d'acide phosphonique et des groupes de siloxane

(30) Priorität: 11.02.1994 DE 4404363
(43) Veröffentlichungstag der Anmeldung: 16.08.1995
(73) Patentinhaber: Clariant GmbH, 65929 Frankfurt am Main (DE)
(72) Erfinder: Engelhardt, Fritz, Dr., D-60386 Frankfurt am Main (DE); Keil, Karl-Heinz, Dr., D-63454 Hanau (DE); Kühlwein, Jürgen, Dr., D-63150 Heusenstamm (DE); Schuler, Wilfried, D-65551 Limburg (DE); Steckelberg, Willi, Dr., D-65719 Hofheim (DE); Zerrer, Ralf, Dr., D-63755 Alzenau (DE); Antwerpen, Werner, D-65824 Schwalbach/Ts. (DE)

(56) Entgegenhaltungen:
- EP-A- 0 494 113
- EP-A- 0 510 631
- EP-A- 0 543 298
- US-A- 4 937 277

## Beschreibung

Die vorliegende Erfindung betrifft phosphin- bzw. phosphonsäuregruppen- und siloxangruppenhaltige Polykondensate, Verfahren zu ihrer Herstellung und ihre Verwendung.

Es ist seit langem bekannt, daß hydrophile Block-Copolyester sowohl als Soil-Release-Agentien, als auch als Antistatika auf dem Gebiet der Textilausrüstung eingesetzt werden können.

In jüngerer Zeit werden bestimmte Polykondensationsprodukte verstärkt als Soil-Release-Komponenten in Waschmittelformulierungen eingesetzt. Die hierfür notwendige Hydrophilie wird dadurch erreicht, daß 0 bis 30 Mol-% Dicarbonsäuren oder Diol-Komponenten Sulfogruppen bzw. Salze davon tragen. Außerdem läßt sich die Hydrophilie durch Verwendung langkettiger Poly(oxyalkylen)oxy-Einheiten erhöhen.

Die Kettenlänge bzw. das Molekulargewicht solcher Produkte kann durch eine entsprechende Reaktionsführung oder auch durch Verwendung von monofunktionalen Komponenten, die als Kettenverschluß ("sogenannte endcaps") fungieren, eingestellt werden. Solche "endcaps" können anionisch oder nicht-ionisch und beispielsweise Carbonsäuren oder Alkohole sein (siehe beispielsweise US 4 721 580, US 4 702 857, US 4 711 730 und US 4 713 194).

Die vorliegende Erfindung betrifft Polykondensate der allgemeinen Formel I 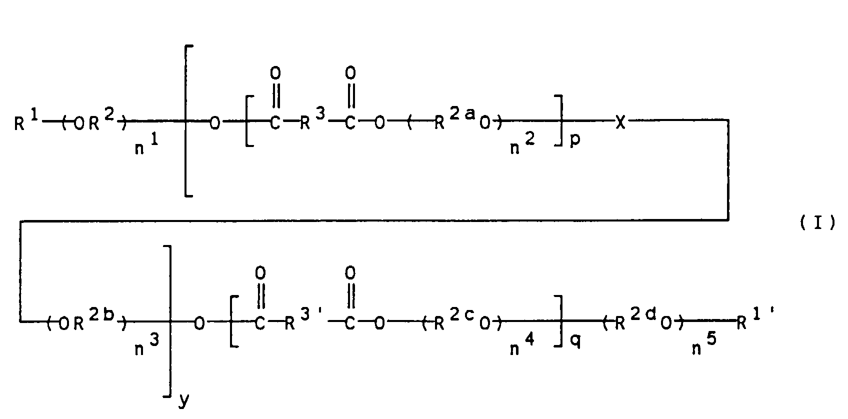 worin
X mindestens einmal für eine Gruppe der Formel VII 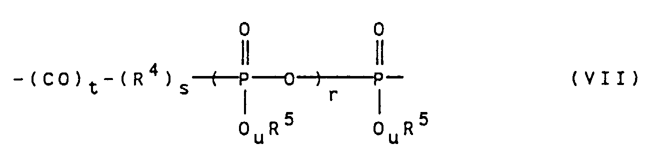 und mindestens einmal für eine Gruppe der Formel VIII 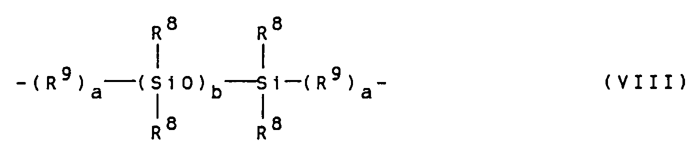 steht;
R¹ und R^{1'} unabhängig voneinander Wasserstoff, (C₁-C₂₂)-Alkyl, (C₂-C₂₂)-Alkenyl, (C₃-C₈)-Cycloalkyl, (C₆-C₁₄)-Aryl, (C₆-C₁₄)-Aryl-(C₁-C₈)-Alkyl, MO₃S-R⁶-, MO₃S-, 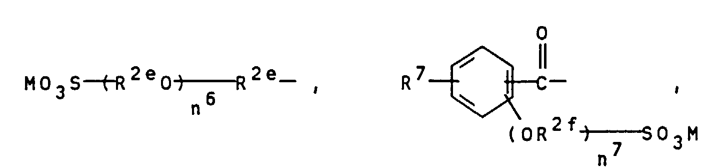 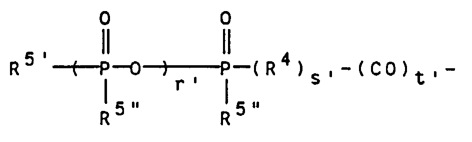 oder 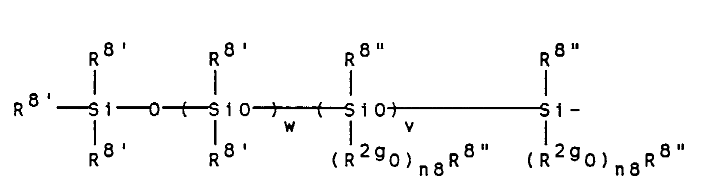 bedeuten;
R² bis R^{2g} unabhängig voneinander (C₁-C₃₀)-Alkylen, (C₃-C₈)-Cycloalkylen und/oder (C₂-C₃₀)-Alkenylen, die durch einen Rest R¹ substituiert sein können, bedeuten;
R³ und R^{3'} unabhängig voneinander (C₁-C₂₂)-Alkylen, (C₃-C₈)-Cycloalkylen, (C₂-C₂₂)-Alkenylen und/oder (C₆-C₁₄)-Arylen bedeuten, wobei 0 bis 30 % aller Reste R³ und R^{3'} einen -SO₃M-Substituenten tragen;
R⁴ (C₁-C₃₀)-Alkylen, (C₃-C₈)-Cycloalkylen oder (C₂-C₃₀)-Alkenylen bedeuten;
R⁵, R^{5'} und R^{5''} unabhängig voneinander Wasserstoff, (C₁-C₃₀)-Alkyl, (C₃-C₈)-Cycloalkyl oder (C₂-C₃₀)-Alkenyl bedeuten;
R⁶ wie R³, aber unabhängig von diesem, definiert ist;
R⁷ (C₁-C₂₂)-Alkyl, (C₃-C₈)-Cycloalkyl oder (C₂-C₂₂)-Alkenyl bedeuten, wobei 0 bis 30 % aller Reste R⁷ einen -SO₃M-Substituenten tragen;
R⁸, R^{8'} und R^{8''} unabhängig voneinander Wasserstoff, (C₁-C₃₀)-Alkyl, (C₃-C₈)-Cycloalkyl oder (C₂-C₃₀)-Alkenyl bedeuten;
R⁹ (C₁-C₃₀)-Alkylen, (C₃-C₈)-Cycloalkylen oder (C₂-C₃₀)-Alkenylen bedeutet;
M Wasserstoff, ein Alkalimetall, die Ammoniumgruppe oder eine substituierte Ammoniumgruppe bedeutet;
n¹ bis n⁸ unabhängig voneinander eine ganze Zahl von 0 bis 40 bedeuten;
p und q unabhängig voneinander eine ganze Zahl von 2 bis 20 bedeuten;
r und r' unabhängig voneinander eine ganze Zahl von 0 bis 40 bedeuten;
t, t', s, s', und u unabhängig voneinander O oder 1 bedeuten;
y eine ganze Zahl von 2 bis 20 bedeutet;
a 0 oder 1 bedeutet;
b eine ganze Zahl von 0 bis 80 bedeutet;
w eine ganze Zahl von 0 bis 80 bedeutet; und
v eine ganze Zahl von 0 bis 80 bedeutet.

Alkylgruppen können geradkettig oder verzweigt sein und sind beispielsweise Methyl, Ethyl, n-Propyl, i-Propyl, n-Butyl, i-Butyl, sek.Butyl, tert.Butyl, n-Pentyl, 3-Methylbutyl, Pentyl-3, n-Hexyl, 2-Ethylbutyl, n-Heptyl, i-Heptyl, Octyl-2, 2-Ethylhexyl, i-Nonyl, n-Decyl, i-Decyl, n-Dodecyl, n-Hexadecyl oder n-Octadecyl. Bevorzugt sind (C₁-C₅)-Alkyl und besonders bevorzugt (C₁-C₃)-Alkyl.

Alkylengruppen können ebenfalls geradkettig oder verzweigt sein. Beispiele sind Ethylen, n-Propylen, i-Propylen, n-Butylen, i-Butylen, sek.-Butylen, tert.Butylen, n-Pentylen, 3-Methylbutylen, n-Hexylen, 2-Ethylbutylen, n-Heptylen, i-Heptylen, Octylen, 2-Ethylhexylen, i-Nonylen, n-Decylen, i-Decylen, n-Dodecylen, n-Hexadecylen und n-Octadecylen.

Für R² bis R³ stehende Alkylengruppen haben bevorzugt 2 bis 5 Kohlenstoffatome und bedeuten besonders bevorzugt Ethylen, n-Propylen oder i-Propylen.

Für R³, R^{3'} und R⁴ stehende Alkylengruppen haben bevorzugt 1 bis 5 Kohlenstoffatome.

Cycloalkylreste sind insbesondere Cyclopropyl, Cyclobutyl, Cyclopentyl, Cyclohexyl, Cycloheptyl und Cyclooctyl, wobei Cyclopentyl und Cyclohexyl bevorzugt sind. Unter Cycloalkyl wird aber auch beispielsweise Dimethylcycloalkyl verstanden. Analoges gilt für Cycloalkylengruppen.

Auch Alkenylgruppen können geradkettig oder verzweigt sein und entsprechen beispielsweise den oben genannten Alkylgruppen. Bevorzugte Alkenylgruppen haben 2 bis 5 Kohlenstoffatome, wobei Vinyl und Allyl besonders bevorzugt sind.

Alkenylengruppen können ebenfalls geradkettig oder verzweigt sein und entsprechend beispielsweise den oben genannten Alkylengruppen. Bevorzugte Alkenylgruppen haben 2 bis 5 Kohlenstoffatome, wobei Vinylen und Propenylen besonders bevorzugt sind.

Arylgruppen sind bevorzugt Phenyl, Naphthyl, Biphenylyl oder Fluorenyl, wobei Phenyl besonders bevorzugt ist.

Analoges gilt für Arylengruppen, wobei 1,2-Phenylen, 1,3-Phenylen und 1,4-Phenylen besonders bevorzugt sind.

Bevorzugte Arylalkylgruppen sind Benzyl und Phenethyl.

Ein für M stehendes Alkalimetall ist bevorzugt Natrium oder Kalium. Als für M stehende substituierte Ammoniumgruppen können alle üblichen mono-, di-, tri- oder tetrasubstituierten Ammoniumgruppen eingesetzt werden. Geeignete Substituenten sind dabei insbesondere Alkylgruppen und gegebenenfalls substituiertes Phenyl. Bevorzugt ist Tetra-(C₁-C₄)-alkylammonium.

R⁶ bedeutet bevorzugt (C₁-C₄)-Alkylen oder (C₂-C₄)-Alkenylen.
R⁷ bedeutet bevorzugt (C₁-C₄)-Alkyl.

Jeder einzelne der Reste R² bis R^{2g} kann, vorausgesetzt n > 1, auch innerhalb eines erfindungsgemäßen Polykondensats verschiedene Bedeutungen haben. Innerhalb einer polymeren Teilstruktur, z.B. -(R^{2a}O)ₙ₂- können diese verschiedenen Bedeutungen nach statistischen Regeln oder blockweise aufeinander folgen. Analoges gilt für R³ und R^{3'} sowie für n², n³ und n⁴.

In bevorzugten Polykondensaten der allgemeinen Formel I bedeuten
R¹ und R^{1'} unabhängig voneinander Methyl oder Ethyl,
R² bis R^{2g} unabhängig voneinander Ethylen, n-Propylen oder i-Propylen,
R³ und R^{3'} unabhängig voneinander (C₁-C₄)-Alkylen, Phenylen oder Naphthylen,
R⁴ (C₂-C₄)-Alkylen,
R⁵, R^{5'} und R^{5"} unabhängig voneinander Wasserstoff oder (C₁-C₅)-Alkyl,
R⁸, R^{8'} und R^{8"} unabhängig voneinander Wasserstoff oder (C₁-C₅)-Alkyl,
R⁹ (C₂-C₄)-Alkylen,
M Wasserstoff, Natrium oder Kalium,
n¹ bis n⁸ unabhängig voneinander eine ganze Zahl von 2 bis 35,
p und q unabhängig voneinander eine ganze Zahl von 2 bis 20,
r und r' unabhängig voneinander eine ganze Zahl von 0 bis 19,
y eine ganze Zahl von 2 bis 5
b eine ganze Zahl von 0 bis 40,
w eine ganze Zahl von 1 bis 30,
v eine ganze Zahl von 0 bis 4.

Bevorzugte Polykondensate der allgemeinen Formel I sind darüberhinaus solche, die Molekulargewichte von 2000 bis 20000 aufweisen.

In besonders bevorzugten Polykondensaten der allgemeinen Formel I sind alle Werte n¹ bis n⁸ identisch oder stehen nur für 2 oder 3 verschiedene ganze Zahlen.

Darüber hinaus ist es besonders bevorzugt, wenn alle Reste R² bis R^{2g} identisch sind oder nur 2 oder 3 verschiedene Bedeutungen haben.

Weiterhin bedeutet die Summe p + q besonders bevorzugt eine ganze Zahl von 5 bis 15.

Die erfindungsgemäßen Polykondensate der allgemeinen Formel I können dadurch hergestellt werden, daß man
a) eine Verbindung der allgemeinen Formel IIa

   R¹⁰OOC-R³-COOR¹⁰ (IIa)

   worin R³ wie oben angegeben definiert ist und R¹⁰ Wasserstoff, (C₁-C₄)-Alkyl, Halogen, wie insbesondere Chlor, oder R¹⁰OOC-R³-CO- bedeutet, und eine Verbindung der allgemeinen Formel IIb

   R¹¹OOC-R^{3'}-COOR¹¹ (IIb)

   worin R^{3'} wie oben angegeben definiert ist und R¹¹ Wasserstoff, (C₁-C₄)-Alkyl, Halogen, wie insbesondere Chlor, oder R¹¹OOC-R^{3'}-CO- bedeutet, und
b) eine Verbindung der allgemeinen Formel IIIa 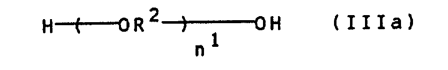 und/oder eine Verbindung der allgemeinen Formel IIIb 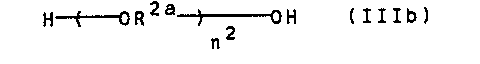 und/oder eine Verbindung der allgemeinen Formel IIIc 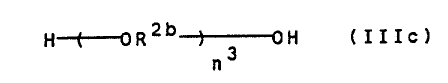 und/oder eine Verbindung der allgemeinen Formel IIId 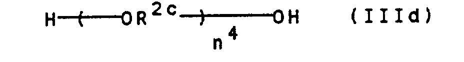 und/oder eine Verbindung der allgemeinen Formel IIIe 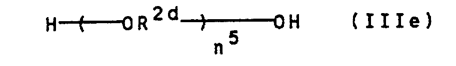 worin R² bis R^{2d} und n¹ bis n⁵ wie oben angegeben definiert sind, und
c) eine Verbindung der allgemeinen Formel IVa

   R¹-OH (IVa)

   worin R¹ wie oben angegeben definiert ist, und eine Verbindung der allgemeinen Formel IVb

   R^{1'}-OH (IVb)

   worin R^{1'} wie oben angegeben definiert ist, und
d) eine Verbindung der allgemeinen Formel V 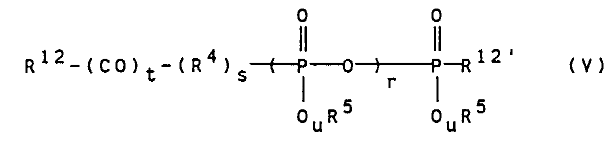 worin R⁴, R⁵, r, s, t und u wie oben angegebenen definiert sind, und R¹² und R^{12'} unabhängig voneinander Hydroxy, (C₁-C₄)-Alkoxy oder Halogen, insbesondere Chlor, bedeuten, und
   eine Verbindung der allgemeinen Formel VI 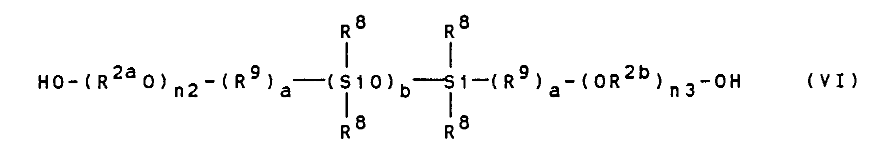 worin R^{2b}, R⁸, R⁹, n³, a und b wie oben angegeben definiert sind, miteinander umsetzt.

Verbindungen der allgemeinen Formeln IIa bzw. IIb sind beispielswiese Malonsäure, Bernsteinsäure, Glutarsäure, Adipinsäure, Korksäure, Maleinsäure, Fumarsäure, Itakonsäure, Cyclohexandicarbonsäure-1,4, Cyclohexandicarbonsäure-1,3, Phthalsäure, Isophthalsäure, Terephthalsäure, 1,4- und 1,5-Naphthalindicarbonsäure, Diphensäure, Norbornandicarbonsäure sowie deren Methyl-, Ethyl-, Propyl- und Butylester, Anhydride und Chloride, desweiteren Natrium-, Kalium- und Ammoniumsulfonatobernsteinsäure, 4-Natrium- und Kalium-sulfonatophthalsäure, 2-Natrium-sulfonatoterephthalsäure, 5-Natrium-sulfonatoisophthalsäure, Natrium-sulfonatobernsteinsäure sowie deren Methyl-, Ethyl-, Propyl- und Butylester, Anhydride und Chloride.

Verbindungen der allgemeinen Formeln IIIa bis IIIe sind beispielsweise Ethylenglykol, Propandiol-1,2 und -1,3, Ethylenglykol-mono-(3-hydroxypropyl)ether, Ethylenglykolmono-(3-hydroxy-propyl-2)ether, Ethylenglykol-mono-(2-hydroxy-propyl)ether, Butandiole, insbesondere Butandiol-1,4, Pentandiole, wie Pentandiol-1,5, Hexandiole, insbesondere Hexandiol-1,6, Decandiol-1,10, Diethylenglykol, Dipropylenglykol, Bis(3-hydroxypropyl)-ether, Triethylenglykol, Tetraethylenglykol, Tripropylenglykol, 4,8-Dioxadecan-1,10-diol, Polyethylenglykole vom Molekulargewicht 300 bis 2000, Polypropylenglykole vom Molekulargewicht 300 bis 2000, Polyether des Propandiols-1,3 und gemischte Polyether des Ethylenglykols mit Propylenglykol und/oder gegebenenfalls Propandiol-1,3, wobei die genannten Polyether Molekulargewichte von 300 bis 2000 besitzen, Bis(4-hydroxybutyl)ether, 2-Methylenpropandiol-1,3, 2,4-Dimethyl-2-ethylhexandiol-1,3, 2-Ethyl-2-butylpropandiol- 1,3, 2,2-Dimethylpropandiol-1,3, 2-Ethyl-2-isobutylpropandiol-1,3, 2,2,4-Trimethyl-hexandiol-1,6, 1,3-Dihydroxy-cyclohexan sowie 1,4-Dihydroxy-cyclohexan (Chinit).

Verbindungen der allgemeinen Formeln IVa bzw. IVb sind beispielsweise Methanol, Ethanol, n-Propanol, i-Propanol, n-Butanol, Cyclohexanol, Cyclopentanol, Benzylalkohol, Phenol, Allylalkohol, Sulfonsäure, Benzoesäuren der Formel IX 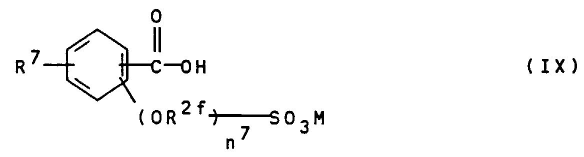 worin R^{2f}, R⁷, M und n⁷ wie oben angegeben definiert sind, Verbindungen der Formel 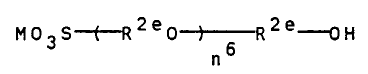 worin R^{2e}, M und n⁶ wie oben angegeben definiert sind, (Poly)phosphonsäuren der Formel VII 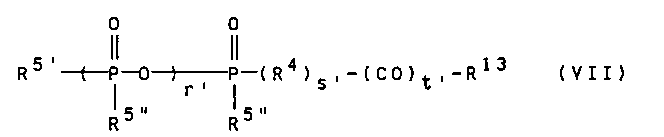 worin R⁴, R^{5'}, R^{5"} sowie s', t', r' wie oben angegeben definiert sind und R¹³ Hydroxy, (C₁-C₄)-Alkoxy oder Halogen, insbesondere Chlor, bedeutet,
sowie Polysiloxane der Formel X 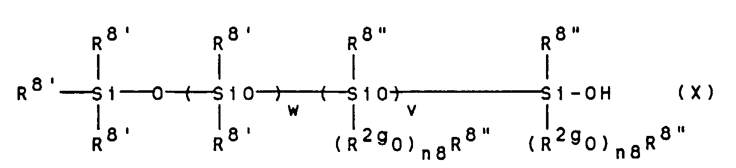 worin R^{8'}, R^{8"}, R^{2g}, n⁸, v und w wie oben angegeben definiert sind.

Die Benzoesäuren der Formel VI können auch in Form ihrer (C₁-C₄)-Alkylester oder ihrer Halogenide, insbesondere Chloride, eingesetzt werden.

In einer bevorzugten Ausführungsform des erfindungsgemäßen Herstellungsverfahrens werden
a) die Verbindungen der Formeln IIa und IIb in Mengen von zusammen 100 Mol-%,
b) die Verbindungen der Formeln IIIa bis IIIe in Mengen von zusammen 150 bis 250 Mol-%,
c) die Verbindungen der Formeln IVa und IVb in Mengen von zusammen 20 bis 40 Mol-% und
d) die Verbindungen der Formeln V und VI in Mengen von zusammen 10 bis 50 Mol-% eingesetzt.

Die Umsetzung kann durch eine gezielte Reaktionsführung gesteuert und somit Struktur und Molgewicht des hergestellten Produkts beeinflußt werden. Geeignete Parameter sind Temperatur, Druck oder auch Menge und Reihenfolge der Zugabe der Ausgangsvebindungen gemäß a) bis d).

Üblicherweise wird die Umsetzung in eine Veresterungsreaktion (falls R¹⁰ bzw. R¹¹ Wasserstoff bedeuten) oder Umesterungsreaktion (falls R¹⁰ bzw. R¹¹ eine andere Bedeutung als Wasserstoff haben) und eine Kondensationsreaktion unterteilt. Die Ver(Um)esterungsreaktion wird dabei normalerweise bei Normaldruck und die Kondensationsreaktion bei einem Druck von 1013 bis 5 mbar ausgeführt. Es ist bevorzugt, die Ver(Um)esterungsreaktion in Gegenwart eines Veresterungs- bzw. Umesterungskatalysators auszuführen. Geeignete Katalysatoren dieser Art sind beispielsweise Titanalkoholate, insbesondere Titantetraisopropylat, Manganacetat und Zinkacetat.

Das erfindungsgemäße Verfahren wird normalerweise bei Temperaturen von 100 bis 300°C, besonders bevorzugt bei 150 bis 250°C, durchgeführt. Die Reaktionszeiten betragen dabei 1 bis 10 Stunden, bevorzugt 2 bis 5 Stunden.

Soweit während der Umsetzung flüchtige Produkte entstehen, werden diese nach oder bevorzugt kontinuierlich während der Reaktion abdestilliert.

Die Verbindungen der Formeln IIa, IIb, IIIa bis IIIe, IVa, IVb, V, VI, VII, X und IX sind bekannt, können käuflich erworben werden oder sind nach bekannten Herstellungsverfahren zugänglich.

Die erfindungsgemäßen Polykondensate können in Wasser gelöst bzw. dispergiert werden, wobei klare bis opaleszierende, viskose Lösungen resultieren. Aufgrund ihres Soil-Release-Effekts können sie zur Textilausrüstung von Polyestergeweben verwendet werden.

Unter Polyestermaterialien werden dabei insbesondere Fäden, Garne oder textile Flächengebilde aus Polyester verstanden.

Deren Behandlung mit den erfindungsgemäßen Polykondensaten erfolgt beispielsweise derart, daß letztere vorzugsweise in Form von Dispersionen in an sich bekannter Weise aufgebracht und nach dem üblichen Trocknen durch eine Hitzebehandlung fixiert werden. Der Auftrag geschieht beispielsweise nach dem Ausziehverfahren mittels einer Foulardapplikation oder durch Sprühen.

Die erfindungsgemäßen Polykondensate werden dabei bevorzugt in Mengen von 0,3 bis 1,5 Gew.%, besonders bevorzugt 0,6 bis 1,2 Gew.%, bezogen auf das Substratgewicht, aufgebracht.

Dementsprechend werden Dispersionen der erfindungsgemäßen Polykondensate, die in der Regel einen Polykondensatgehalt von 5 bis 45 Gew.%, bevorzugt 10 bis 35 Gew.%, aufweisen, bevorzugt in einer Menge von 0,9 bis 30 Gew.%, besonders bevorzugt 2,4 bis 12 Gew.%, bezogen auf das Substratgewicht, aufgebracht.

Mechanisch aufgetragener Schmutz, wie Öle und Fette, kann von Materialien, die mit den erfindungsgemäßen Polykondensaten behandelt wurden, wesentlich leichter entfernt werden (Soil-Release-Effekt).

Ein wesentlicher Vorteil im Vergleich zu den Produkten des Standes der Technik ergibt sich durch eine deutliche Abnahme der Schmelzviskosität des erfindungsgemäßen Polykondensats bei 200 bis 250°C mit zunehmendem Anteil an Phosphin- bzw. Phosphonsäure-Einheiten im Molekül, was eine Vereinfachung des Herstellungsverfahrens bedeutet. Darüberhinaus werden durch den Einbau der Polysiloxaneinheiten, den mit den erfindungsgemäßen Polykondensaten ausgerüsteten Textilien besonders vorteilhafte Griffeigenschaften verliehen.

### BEISPIELE

Die folgende Tabelle 1 nennt Verbindungen der allgemeinen Formel V, die bei den folgenden Beispielen verwendet werden können.

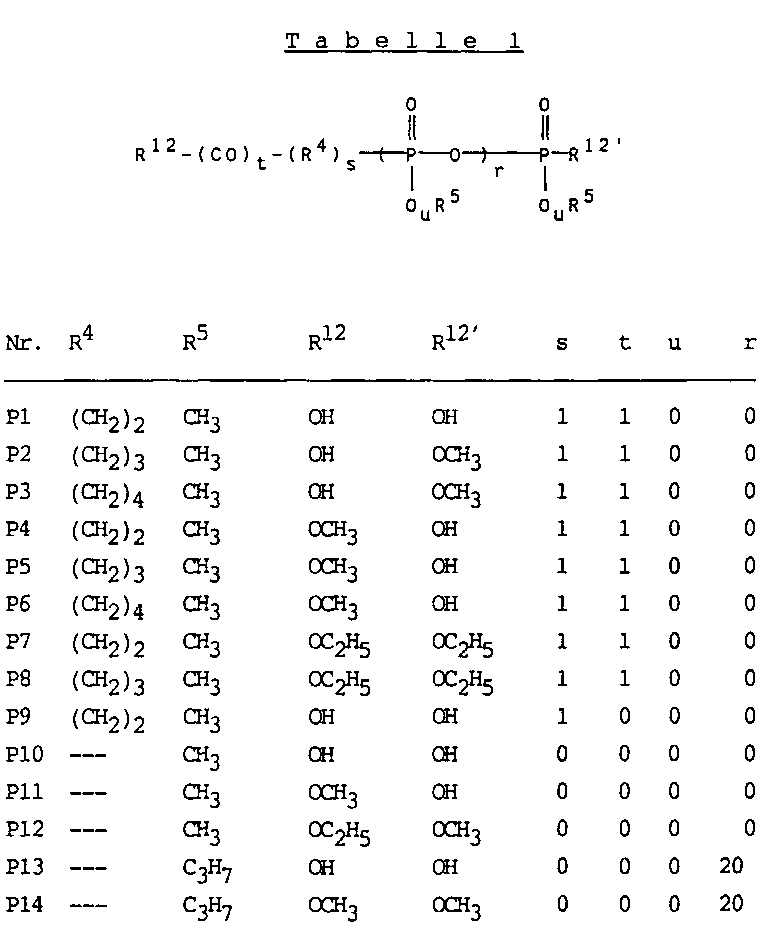

Die folgende Tabelle 2 nennt Verbindungen der allgemeinen Formel VII, die bei den folgenden Beispielen verwendet werden können:

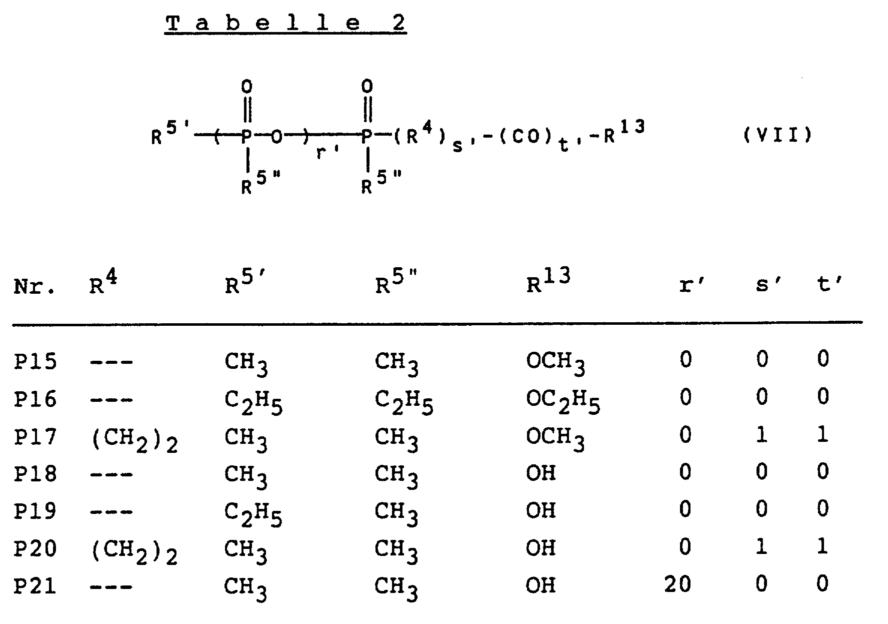

Die folgende Tabelle 3 nennt Verbindungen der Formel VI, die in den folgenden Beispielen eingesetzt werden können:

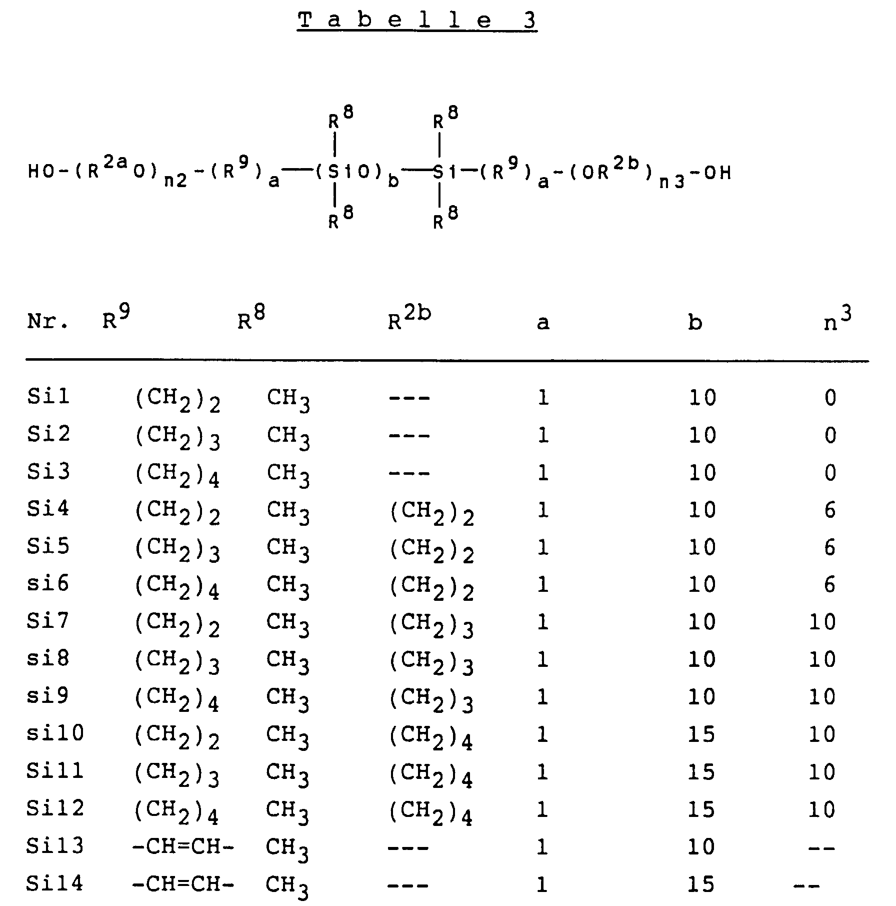

### Beispiel 1

In einem 1-l-Vierhalskolben mit KPG-Rührer, 40-cm-Einstichkolonne, Innenthermometer und Tropftrichter mit aufgesetztem Gaseinleitungsrohr werden 282,47 g (1,70 mol) Isophthalsäure, 80,45 g (0,30 mol) 5-Natriumsulfoisophthalsäure, 213,0 g (2,80 mol) Propandiol-1,2, 127,40 g (1,20 mol) Diethylenglykol sowie 0,82 g (0,010 mol) Natriumacetat wasserfrei vorgelegt. Danach wird mit Stickstoff inertisiert und anschließend 0,19 g (0,0007 mol) Titantetraisopropylat zugefügt. Dann wird auf eine Innentemperatur von 180 - 185°C erhitzt, wobei innerhalb von ca. 3 h Wasser abdestilliert (70 g, 97 % d.Th.). Nach dem Abkühlen auf 80 - 85°C werden 150,00 g (0,10 mol) Si4 (siehe Tabelle 3) sowie 15,20 g (0,10 mol) der Carboxyphosphinsäure P2 (siehe Tabelle 1) in Form von 19,6 g (0,10 mol) ihres Ethylenglykolhalbesters zugefügt. Danach wird die Temperatur auf 200 - 210°C gesteigert. Nach Erreichen dieser Temperatur wird innerhalb von 30 min. der Druck auf 1 mbar abgesenkt. Bei diesen Reaktionsbedingungen wird 3 h weiterkondensiert, wobei eine Destillatmenge von 220,00 g anfällt.

Nach Beendigung der Kondensation wird zunächst auf ca. 150°C abgekühlt und anschließend mit Inertgas belüftet.

Nach dem Abkühlen auf Raumtemperatur wird die erstarrte Schmelze zerkleinert und ausgetragen.

### Beispiel 2

In einem 1-l-Vierhalskolben mit KPG-Rührer, 40-cm-Einstichkolonne, Innenthermometer und Tropftrichter mit aufgesetztem Gaseinleitungsrohr werden 349,52 g (1,80 mol) Therephthalsäuredimethylester, 260,70 g (4,20 mol) Ethandiol-1,2, 0,82 g (0,01 mol) Natriumacetat wasserfrei vorgelegt. Danach wird mit Stickstoff inertisiert und anschließend 0,19 g (0,0007 mol) Titantetraisopropylat zugefügt. Dann wird auf eine Innentemperatur von 170 - 175°C erhitzt, wobei innerhalb von ca. 2 h Methanol abdestilliert (120 g, d.h. 94 % d.Th.). Nach dem Abkühlen auf 80 - 85°C werden 324,00 g (0,24 mol) MPEG 1350, 300 g (0,20 mol) PEG 1500 sowie 24,80 g (0,20 mol) des Methylphosphonsäuredimethylesters P11 (siehe Tabelle 1) sowie 361,80 g (0,20 mol) Si2 (siehe Tabelle 3) zugegeben. Danach wird die Temperatur auf 200 - 210°C gesteigert. Bei diesen Reaktionsbedingungen wird 3 h weiterkondensiert, wobei eine Destillatmenge von 210,00 g anfällt.

Nach Beendigung der Kondensation wird zunächst auf ca. 150°C abgekühlt und anschließend mit Inertgas belüftet.

Nach dem Abkühlen auf Raumtemperatur wird die erstarrte Schmelze zerkleinert und ausgetragen.

### Beispiel 3

In einem 1-1-Vierhalskolben mit KPG-Rührer, 40-cm-Einstichkolonne, Innenthermometer und Tropftrichter mit aufgesetztem Gaseinleitungsrohr werden 282,47 g (1,70 mol) Isophthalsäure, 80,45 g (0,30 mol) 5-Natriumsulfoisophthalsäure, 217,20 g (3,50 mol) Ethandiol-1,2, 76,10 g (1,0 mol) Propandiol-1,2, 29,63 g (0,20 mol) Natrium-2-hydroxyethansulfonat sowie 0,82 g (0,010 mol) Natriumacetat wasserfrei vorgelegt. Danach wird mit Stickstoff inertisiert und anschließend 0,19 g (0,0007 mol) Titantetraisopropylat zugefügt. Dann wird auf eine Innentemperatur von 170 - 175°C erhitzt, wobei innerhalb von ca. 2 h Wasser abdestilliert (68,0 g, d.h. 94 % d.Th.). Nach dem Abkühlen auf 80 - 85°C werden 42,40 g (0,02 mol) Propanphosphonsäureanhydrid P13 (siehe Tabelle 1) sowie 300,00 g (0,20 mol) Si4 (siehe Tabelle 3) zugegeben.

Danach wird die Innentemperatur auf 200 - 210°C gesteigert. Nach Erreichen dieser Temperatur wird innerhalb von 30 min der Druck auf 1 mbar abgesenkt sowie die Temperatur auf 220°C gesteigert. Bei diesen Reaktionsbedingungen wird 3 h weiterkondensiert, wobei eine Destillatmenge von 210,00 g anfällt.

Nach Beendigung der Kondensation wird zunächst auf ca. 150°C abgekühlt und anschließend mit Inertgas belüftet.

Nach dem Abkühlen auf Raumtemperatur wird die erstarrte Schmelze zerkleinert und ausgetragen.

Analog den Beispiele 1 bis 3 können auch mit den folgenden Ausgangsverbindungen erfindungsgemäße Polykondensate hergestellt werden:

### Beispiel 4

0,3 mol 5-Natriumsulfoisophthalsäuredimethylester,
1,7 mol Isophthalsäuredimethylester,
2,5 mol Ethandiol-1,2,
2,0 mol Propandiol-1,2,
0,2 mol Verbindung P3 gemäß Tabelle 1,
0,05 mol Verbindung Si1 gemäß Tabelle 3.

### Beispiel 5

0,3 mol 5-Natriumsulfoisophthalsäuredimethylester,
1,7 mol Terephthalsäuredimethylester,
2,0 mol Ethandiol-1,2,
2,5 mol Propandiol-1,2,
0,1 mol Verbindung P9 gemäß Tabelle 1,
0,02 mol Verbindung Si5 gemäß Tabelle 3.

### Beispiel 6

2,0 mol Terephthalsäuredimethylester,
3,5 mol Propandiol-1,2,
1,0 mol Polyethylenglykol 1500,
0,05 mol Verbindung P13 gemäß Tabelle 1,
0,15 mol Verbindung Si6 gemäß Tabelle 3,
0,1 mol Polyethylenglykolmonomethylether 750.

### Beispiel 7

0,5 mol Bernsteinsäuredimethylester,
1,5 mol Isophthalsäuredimethylester,
0,5 mol 1,4-Bis-(hydroxymethyl)cyclohexan, cis/trans,
4,0 mol Ethandiol-1,2,
0,3 mol Verbindung P1 gemäß Tabelle 1,
0,10 mol Verbindung Si5 gemäß Tabelle 3,
0,2 mol 2-Hydroxyethansulfonsäure, Na-Salz.

### Beispiel 8

0,2 mol 1,4-Naphthalindicarbonsäure,
1,5 mol 5-Natriumsulfoisophthalsäure,
3,0 mol Diethylenglykol,
1,5 mol Hexandiol-1,6,
0,2 mol Verbindung P2 gemäß Tabelle 1,
0,01 mol Verbindung Si8 gemäß Tabelle 3,
0,2 mol 3-Na-Sulfobenzoesäure.

### Beispiel 9

1,0 mol Adipinsäuredimethylester,
1,0 mol Terephthalsäuredimethylester,
2,0 mol Diethylenglykol,
2,5 mol Polyethylenglykol 1000,
0,05 mol Verbindung P1 gemäß Tabelle 1,
0,15 mol Verbindung Si1 gemäß Tabelle 3,
0,05 mol Verbindung P18 gemäß Tabelle 2.

## Patentansprüche

1. Polykondensate der allgemeinen Formel I 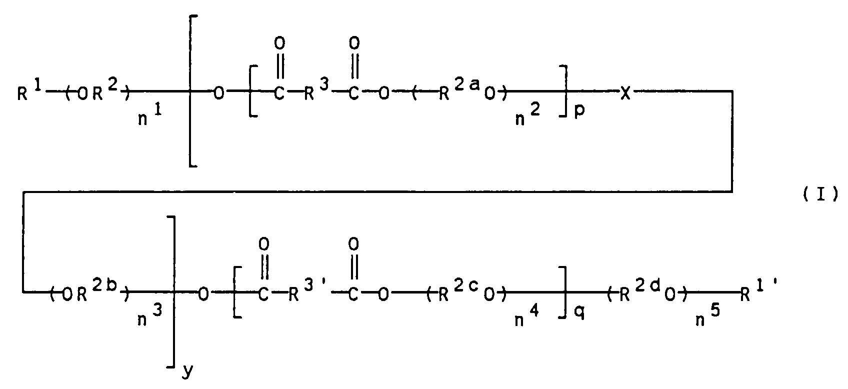 worin
X mindestens einmal für eine Gruppe der Formel VII 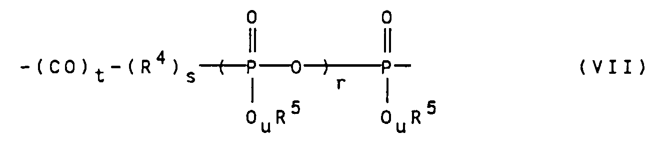 und mindestens einmal für eine Gruppe der Formel VIII 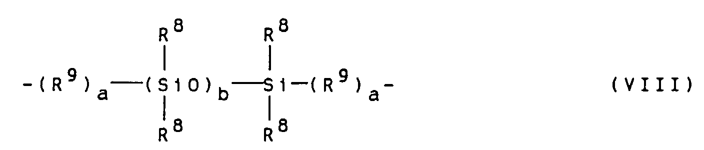 steht;
R¹ und R^{1'} unabhängig voneinander Wasserstoff, (C₁-C₂₂)-Alkyl, (C₂-C₂₂)-Alkenyl, (C₃-C₈)-Cycloalkyl, (C₆-C₁₄)-Aryl, (C₆-C₁₄)-Aryl-(C₁-C₈)-Alkyl, MO₃S-R⁶-, MO₃S-, 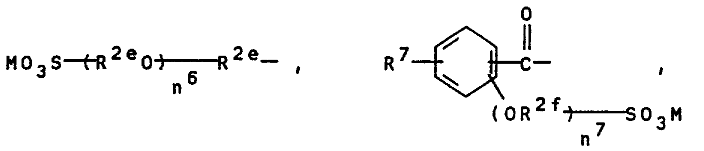 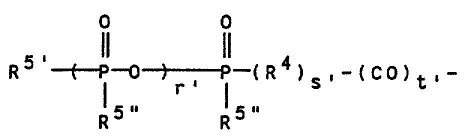 oder 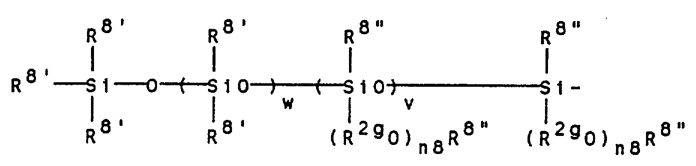 bedeuten;
R² bis R^{2g} unabhängig voneinander (C₁-C₃₀)-Alkylen, (C₃-C₈)-Cycloalkylen und/oder (C₂-C₃₀)-Alkenylen, die durch einen Rest R¹ substituiert sein können, bedeuten;
R³ und R^{3'} unabhängig voneinander (C₁-C₂₂)-Alkylen, (C₃-C₈)-Cycloalkylen, (C₂-C₂₂)-Alkenylen und/oder (C₆-C₁₄)-Arylen bedeuten, wobei 0 bis 30 % aller Reste R³ und R^{3'} einen -SO₃M-Substituenten tragen;
R⁴ (C₁-C₃₀)-Alkylen, (C₃-C₈)-Cycloalkylen oder (C₂-C₃₀)-Alkenylen bedeuten;
R⁵, R^{5'} und R^{5''} unabhängig voneinander Wasserstoff, (C₁-C₃₀)-Alkyl, (C₃-C₈)-Cycloalkyl oder (C₂-C₃₀)-Alkenyl bedeuten;
R⁶ wie R³, aber unabhängig von diesem, definiert ist;
R⁷ (C₁-C₂₂)-Alkyl, (C₃-C₈)-Cycloalkyl oder (C₂-C₂₂)-Alkenyl bedeuten, wobei 0 bis 30 % aller Reste R⁷ einen -SO₃M-Substituenten tragen;
R⁸, R^{8'} und R^{8''} unabhängig voneinander Wasserstoff, (C₁-C₃₀)-Alkyl, (C₃-C₈)-Cycloalkyl oder (C₂-C₃₀)-Alkenyl bedeuten;
R⁹ (C₁-C₃₀)-Alkylen, (C₃-C₈)-Cycloalkylen oder (C₂-C₃₀)-Alkenylen bedeutet;
M Wasserstoff, ein Alkalimetall, die Ammoniumgruppe oder eine substituierte Ammoniumgruppe bedeutet;
n¹ bis n⁸ unabhängig voneinander eine ganze Zahl von 0 bis 40 bedeuten;
p und q unabhängig voneinander eine ganze Zahl von 2 bis 20 bedeuten;
r und r' unabhängig voneinander eine ganze Zahl von 0 bis 40 bedeuten;
t, t', s, s', und u unabhängig voneinander O oder 1 bedeuten;
y eine ganze Zahl von 2 bis 20 bedeutet;
a 0 oder 1 bedeutet;
b eine ganze Zahl von 0 bis 80 bedeutet;
w eine ganze Zahl von 0 bis 80 bedeutet; und
v eine ganze Zahl von 0 bis 80 bedeutet.

2. Polykondensate gemäß Anspruch 1, dadurch gekennzeichnet, daß
R¹ und R^{1'} unabhängig voneinander Methyl oder Ethyl,
R² bis R^{2g} unabhängig voneinander Ethylen, n-Propylen oder i-Propylen,
R³ und R^{3'} unabhängig voneinander (C₁-C₄)-Alkylen, Phenylen oder Naphthylen,
R⁴ (C₂-C₄)-Alkylen,
R⁵, R^{5'} und R^{5''} unabhängig voneinander Wasserstoff oder (C₁-C₅)-Alkyl,
R⁸, R^{8'} und R^{8''} unabhängig voneinander Wasserstoff oder (C₁-C₅)-Alkyl,
R⁹ (C₂-C₄)-Alkylen,
M Wasserstoff, Natrium oder Kalium,
n¹ bis n⁸ unabhängig voneinander eine ganze Zahl von 2 bis 35,
p und q unabhängig voneinander eine ganze Zahl von 2 bis 20,
r und r' unabhängig voneinander eine ganze Zahl von 0 bis 19,
y eine ganze Zahl von 2 bis 5,
b eine ganze Zahl von 0 bis 40,
w eine ganze Zahl von 1 bis 30,
v eine ganze Zahl von 0 bis 4
bedeuten.

3. Polykondensate gemäß Anspruch 1 und/oder 2, dadurch gekennzeichnet, daß alle Werte n¹ bis n⁸ identisch sind oder nur für 2 oder 3 verschiedene ganze Zahlen stehen.

4. Polykondensate gemäß einem oder mehreren der Ansprüche 1 bis 3, dadurch gekennzeichnet, daß alle Reste R² bisR^{2g} identisch sind oder nur 2 oder 3 verschiedene Bedeutungen haben.

5. Polykondensate gemäß einem oder mehreren der Ansprüche 1 bis 4, dadurch gekennzeichnet, daß die Summe p + q eine ganze Zahl von 5 bis 15 ist.

6. Polykondensate gemäß einem oder mehreren der Ansprüche 1 bis 5, dadurch gekennzeichnet, daß die Molekulargewichte von 2000 bis 20000 aufweisen.

7. Verfahren zur Herstellung der Polykondensate gemäß einem oder mehrern der Ansprüche 1 bis 6, dadurch gekennzeichnet, daß
a) eine Verbindung der allgemeinen Formel IIa
R¹⁰OOC-R³-COOR¹⁰ (IIa)
worin R³ wie in Anspruch 1 angegeben definiert ist und R¹⁰ Wasserstoff, (C₁-C₄)-Alkyl, Halogen, wie insbesondere Chlor, oder R¹⁰OOC-R³-CO- bedeutet, und eine Verbindung der allgemeinen Formel IIb
R¹¹OOC-R^{3'}-COOR¹¹ (IIb)
worin R^{3'} wie in Anspruch 1 angegeben definiert ist und R¹¹ Wasserstoff, (C₁-C₄)-Alkyl, Halogen, wie insbesondere Chlor, oder R¹¹OOC-R^{3'}-CO- bedeutet, und
b) eine Verbindung der allgemeinen Formel IIIa 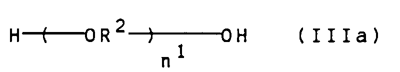 und/oder eine Verbindung der allgemeinen Formel IIIb 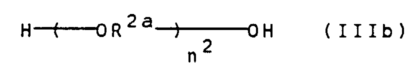 und/oder eine Verbindung der allgemeinen Formel IIIc 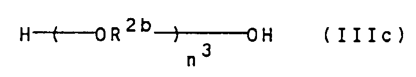 und/oder eine Verbindung der allgemeinen Formel IIId 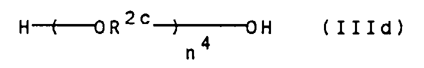 und/oder eine Verbindung der allgemeinen Formel IIIe 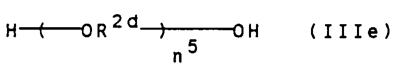 worin R² bis R^{2d} und n¹ bis n⁵ wie in Anspruch 1 angegeben definiert sind, und
c) eine Verbindung der allgemeinen Formel IVa
R¹-OH (IVa)
worin R¹ wie in Anspruch 1 angegeben definiert ist, und eine Verbindung der allgemeinen Formel IVb
R^{1'}-OH (IVb)
worin R^{1'} wie in Anspruch 1 angegeben definiert ist, und
d) eine Verbindung der allgemeinen Formel V 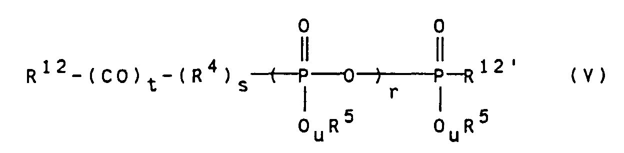 worin R⁴, R⁵, r, s, t und u wie in Anspruch 1 angegebenen definiert sind, und R¹² und R^{12'} unabhängig voneinander Hydroxy, (C₁-C₄)-Alkoxy oder Halogen, insbesondere Chlor, bedeuten, und
eine Verbindung der allgemeinen Formel VI 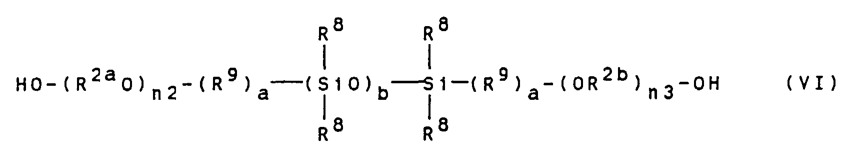 worin R^{2b}, R⁸, R⁹, n³, a und b wie in Anspruch 1 angegeben definiert sind, miteinander umsetzt.

8. Verfahren gemäß Anspruch 7, dadurch gekennzeichnet, daß
a) die Verbindungen der Formeln IIa und IIb in Mengen von zusammen 100 Mol-%,
b) die Verbindungen der Formeln IIa bis IIIe in Mengen von zusammen 150 bis 250 Mol-%,
c) die Verbindungen der Formeln IVa ind IVb in Mengen von Zusammen 20 bis 40 Mol-% und
d) die Verbindungen der Formeln V und VI in Mengen von zusammen 10 bis 50 Mol-% eingesetzt werden.

9. Verwendung der Polykondensate gemäß einem oder mehreren der Ansprüche 1 bis 6 zur Textilausrüstung von Polyestergeweben.

## Claims

1. Polycondensates of the general formula I 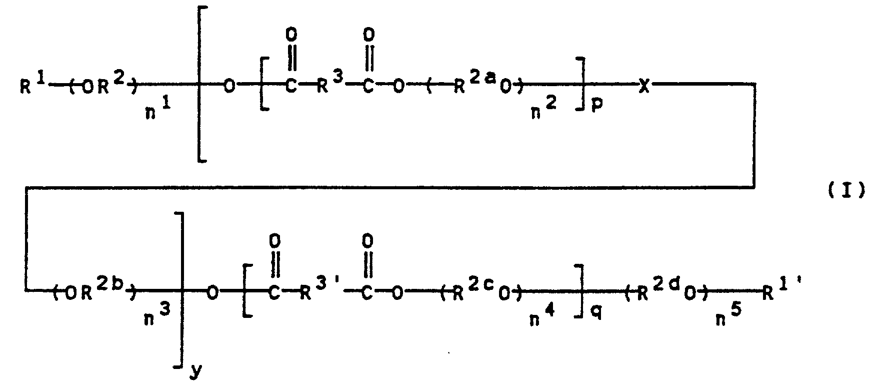 in which
X stands, at least once, for a group of the formula VII 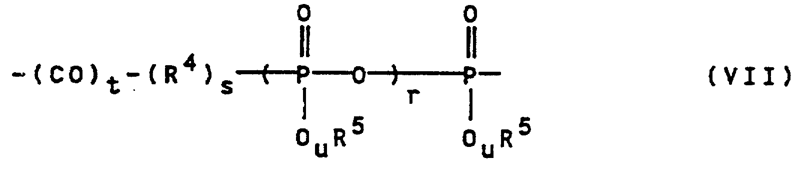 and, at least once, for a group of the formula VIII 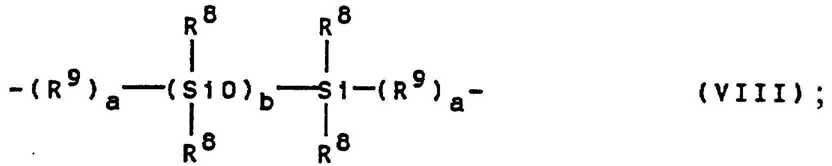 R¹ and R^{1'} independently of one another denote hydrogen, (C₁-C₂₂)-alkyl, (C₂-C₂₂)-alkenyl, (C₃-C₈)-cycloalkyl, (C₆-C₁₄)-aryl, (C₆-C₁₄)-aryl-(C₁-C₈)-alkyl, MO₃S-R⁶-, MO₃S-, 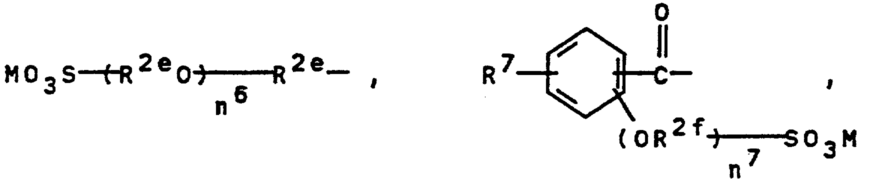 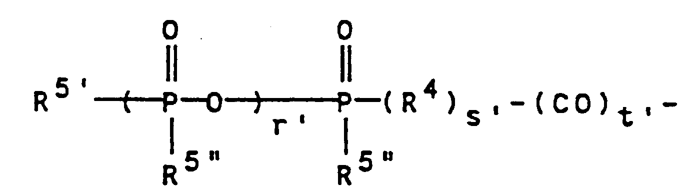 or 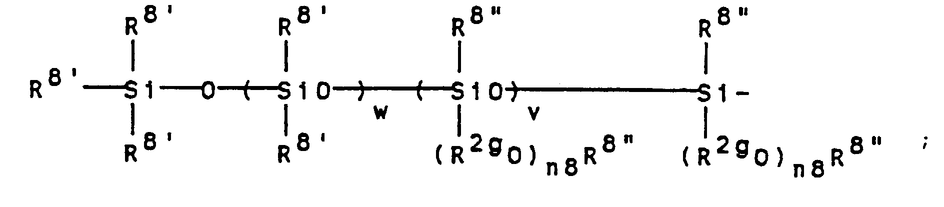
R² to R^{2g} independently of one another denote (C₁-C₃₀)-alkylene, (C₃-C₈)-cycloalkylene and/or (C₂-C₃₀)-alkenylene, each of which can be substituted by a radical R¹;
R³ and R^{3'} independently of one another denote (C₁-C₂₂)-alkylene, (C₃-C₈)-cycloalkylene, (C₂-C₂₂)-alkenylene and/or (C₆-C₁₄)-arylene, where 0 to 30 % of all the radicals R³ and R^{3'} carry an -SO₃M substituent;
R⁴ denotes (C₁-C₃₀)-alkylene, (C₃-C₈)-cycloalkylene or (C₂-C₃₀)-alkenylene;
R⁵, R^{5'} and R^{5"} independently of one another denote hydrogen, (C₁-C₃₀)-alkyl, (C₃-C₈)-cycloalkyl or (C₂-C₃₀)-alkenyl;
R⁶ is defined as R³, but independently of this;
R⁷ denotes (C₁-C₂₂)-alkyl, (C₃-C₈)-cycloalkyl or (C₂-C₂₂)-alkenyl, where 0 to 30 % of all the radicals R⁷ carry an -SO₃M substituent;
R⁸, R^{8'} and R^{8"} independently of one another denote hydrogen, (C₁-C₃₀)-alkyl, (C₃-C₈)-cycloalkyl or (C₂-C₃₀)-alkenyl;
R⁹ denotes (C₁-C₃₀)-alkylene, (C₃-C₈)-cycloalkylene or (C₂-C₃₀)-alkenylene;
M is hydrogen, an alkali metal, the ammonium group or a substituted ammonium group;
n¹ to n⁸ independently of one another denote an integer from 0 to 40;
p and q independently of one another denote an integer from 2 to 20;
r and r' independently of one another denote an integer from 0 to 40;
t, t', s, s' and u independently of one another denote 0 or 1;
y denotes an integer from 2 to 20;
a denotes 0 or 1;
b denotes an integer from 0 to 80;
w denotes an integer from 0 to 80; and
v denotes an integer from 0 to 80.

2. Polycondensates according to Claim 1, characterized in that
R¹ and R^{1'} independently of one another denote methyl or ethyl,
R² to R^{2g} independently of one another denote ethylene, n-propylene or i-propylene,
R³ and R^{3'} independently of one another denote (C₁-C₄)-alkylene, phenylene or naphthylene,
R⁴ denotes (C₂-C₄)-alkylene,
R⁵, R^{5'} and R^{5"} independently of one another denote hydrogen or (C₁-C₅)-alkyl,
R⁸, R^{8'} and R^{8"} independently of one another denote hydrogen or (C₁-C₅)-alkyl,
R⁹ denotes (C₂-C₄)-alkylene,
M denotes hydrogen, sodium or potassium,
n¹ to n⁸ independently of one another denote an integer from 2 to 35,
p and q independently of one another denote an integer from 2 to 20,
r and r' independently of one another denote an integer from 0 to 19,
y denotes an integer from 2 to 5,
b denotes an integer from 0 to 40,
w denotes an integer from 1 to 30,
v denotes an integer from 0 to 4.

3. Polycondensates according to Claim 1 and/or 2, characterized in that all the values n¹ to n⁸ are identical or only stand for 2 or 3 different integers.

4. Polycondensates according to one or more of Claims 1 to 3, characterized in that all the radicals R² to R^{2g} are identical or only have 2 or 3 different meanings.

5. Polycondensates according to one or more of Claims 1 to 4, characterized in that the sum p + q is an integer from 5 to 15.

6. Polycondensates according to one or more of Claims 1 to 5, characterized in that they have molecular weights of 2000 to 20,000.

7. Process for the preparation of the polycondensates according to one or more of Claims 1 to 6, characterized in that
a) a compound of the general formula IIa
R¹⁰OOC-R³-COOR¹⁰ (IIa)
in which R³ is defined as indicated in Claim 1 and R¹⁰ denotes hydrogen, (C₁-C₄)-alkyl, halogen, in particular chlorine, or R¹⁰OOC-R³-CO-, and a compound of the general formula IIb
R¹¹OOC-R^{3'}-COOR¹¹ (IIb)
in which R^{3'} is defined as indicated in Claim 1 and R¹¹ denotes hydrogen, (C₁-C₄)-alkyl, halogen, in particular chlorine, or R¹¹OOC-R³'-CO-, and
b) a compound of the general formula IIIa 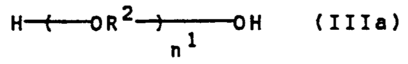 and/or a compound of the general formula IIIb 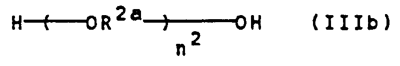 and/or a compound of the general formula IIIc 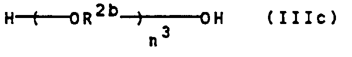 and/or a compound of the general formula IIId 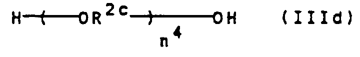 and/or a compound of the general formula IIIe 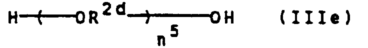 in which R² to R^{2d} and n¹ to n⁵ are defined as indicated in Claim 1, and
c) a compound of the general formula IVa
R¹-OH (IVa)
in which R¹ is defined as indicated in Claim 1,
and a compound of the general formula IVb
R^{1'}-OH (IVb)
in which R^{1'} is defined as indicated in Claim 1, and
d) a compound of the general formula V 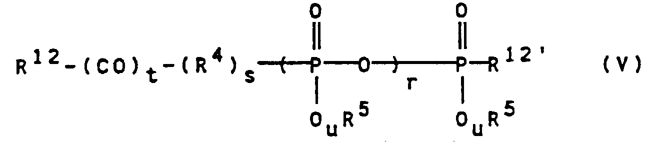 in which R⁴, R⁵, r, s, t and u are defined as indicated in Claim 1, and R¹² and R^{12'} independently of one another denote hydroxyl, (C₁-C₄)-alkoxy or halogen, in particular chlorine, and a compound of the general formula VI 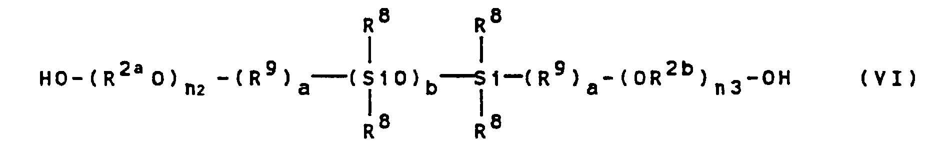 in which R^{2a}, R^{2b}, R⁸, R⁹, n^{2a}, n³, a and b are defined as indicated in Claim 1, are reacted with one another.

8. Process according to Claim 7, characterized in that
a) the compounds of the formulae IIa and IIb are employed in amounts of altogether 100 mol %,
b) the compounds of the formulae IIIa to IIIe are employed in amounts of altogether 150 to 250 mol %,
c) the compounds of the formulae IVa and IVb are employed in amounts of altogether 20 to 40 mol % and
d) the compounds of the formulae V and VI are employed in amounts of altogether 10 to 50 mol %.

9. Use of the polycondensates according to one or more of Claims 1 to 6 for the textile finishing of polyester fabrics.

## Revendications

1. Polycondensats de formule générale I 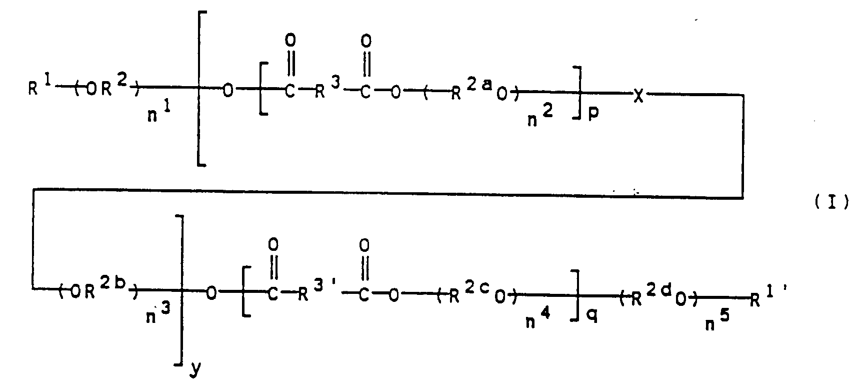 dans laquelle
X représente au moins une fois un groupe de formule VII 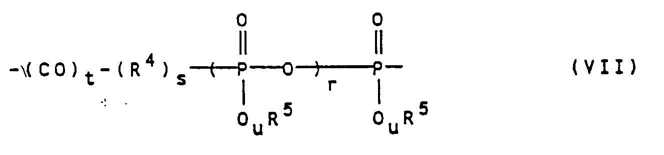 et au moins une fois un groupe de formule VIII 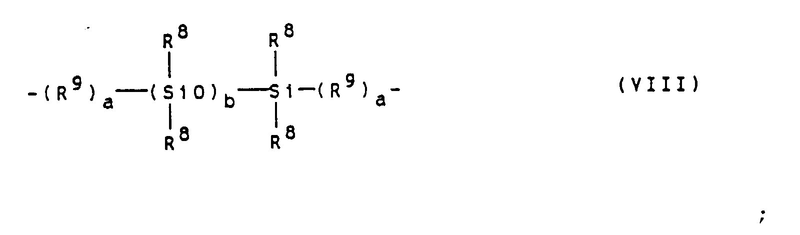
R¹ et R^{1'} représentent indépendamment l'un de l'autre un atome d'hydrogène, un groupe alkyle en C₁-C₂₂, alcényle en C₁-C₂₂, cycloalkyle en C₃-C₈, aryle en C₆-C₁₄, (aryle en C₆-C₁₄)-(alkyle en C₁-C₈), MO₃S-R⁶-, MO₃S-, 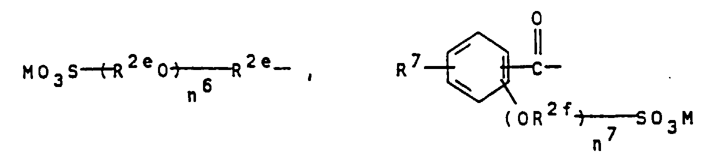 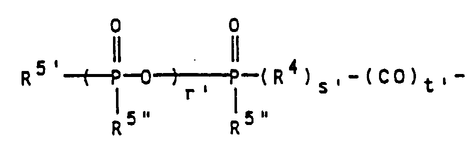
ou 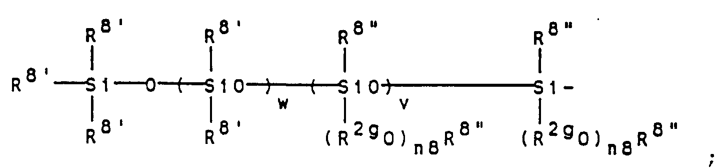
R² à R^{2g} représentent indépendamment les uns des autres un groupe alkylène en C₁-C₃₀, cycloalkylène en C₃-C₈ et/ou alcénylène en C₂-C₃₀, qui peuvent être substitués par un groupe R¹;
R³ et R^{3'} représentent indépendamment l'un de l'autre un groupe alkylène en C₁-C₂₂, cycloalkylène en C₃-C₈, alcénylène en C₂-C₂₂ et/ou arylène en C₆-C₁₄, dans lesquels 0 à 30% de l'ensemble des groupes R³ et R^{3'} portent un substituant -SO₃M;
R⁴ représente un groupe alkylène en C₁-C₃₀, cycloalkylène en C₃-C₈ ou alcénylène en C₂-C₃₀;
R⁵, R^{5'} et R^{5"} représentent indépendamment les uns des autres un atome d'hydrogène, un groupe alkyle en C₁-C₃₀, cycloalkyle en C₃-C₈ ou alcényle en C₂-C₃₀;
R⁶ est défini comme R³, mais indépendamment de celui-ci;
R⁷ représente un groupe alkyle en C₁-C₂₂, cycloalkyle en C₃-C₈ ou alcényle en C₂-C₂₂, dans lequel 0 à 30% de l'ensemble des groupes R⁷ portent un substituant -SO₃M;
R⁸, R^{8'} et R^{8"} représentent indépendamment les uns des autres un atome d'hydrogène, un groupe alkyle en C₁-C₃₀, cycloalkyle en C₃-C₈ ou alcényle en C₂-C₃₀;
R⁹ représente un groupe alkylène en C₁-C₃₀, cycloalkylène en C₃-C₈ ou alcénylène en C₂-C₃₀;
M représente un atome d'hydrogène, un métal alcalin, le groupe ammonium ou un groupe ammonium substitué;
n¹ à n⁸ représentent indépendamment les uns des autres un nombre entier de 0 à 40;
p et q représentent indépendamment l'un de l'autre un nombre entier de 2 à 20;
r et r' représentent indépendamment l'un de l'autre un nombre entier de 0 à 40;
t, t', s, s' et u représentent indépendamment l'un de l'autre 0 ou 1;
y représente un nombre entier de 2 à 20;
a représente 0 ou 1;
b représente un nombre entier de 0 à 80;
w représente un nombre entier de 0 à 80; et
v représente un nombre entier de 0 à 80.

2. Polycondensats selon la revendication 1, caractérisés en ce que,
R¹ et R^{1'} représentent indépendamment l'un de l'autre un groupe méthyle ou éthyle;
R² à R^{2g} représentent indépendamment les uns des autres un groupe éthylène, n-propylène ou i-propylène;
R³ et R^{3'} représentent indépendamment l'un de l'autre un groupe alkylène en C₁-C₄, phénylène ou naphtylène;
R⁴ représente un groupe alkylène en C₂-C₄;
R⁵, R^{5'} et R^{5"} représentent indépendamment les uns des autres un atome d'hydrogène ou un groupe alkyle en C₁-C₅;
R⁸, R^{8'} et R^{8"} représentent indépendamment les uns des autres un atome d'hydrogène ou un groupe alkyle en C₁-C₅;
R⁹ représente un groupe alkylène en C₂-C₄;
M représente un atome d'hydrogène, de sodium ou de potassium;
n¹ à n⁸ représentent indépendamment les uns des autres un nombre entier de 2 à 35;
p et q représentent indépendamment l'un de l'autre un nombre entier de 2 à 20;
r et r' représentent indépendamment l'un de l'autre un nombre entier de 0 à 19;
y représente un nombre entier de 2 à 5;
b représente un nombre entier de 0 à 40;
w représente un nombre entier de 1 à 30;
v représente un nombre entier de 0 à 4.

3. Polycondensats selon la revendication 1 et/ou 2, caractérisés en ce que toutes les valeurs de n¹ à n⁸ sont identiques ou représentent seulement 2 ou 3 nombres entiers différents.

4. Polycondensats selon une ou plusieurs des revendications 1 à 3, caractérisés en ce que tous les groupes R² à R^{2g} sont identiques ou ont seulement 2 ou 3 significations différentes.

5. Polycondensats selon une ou plusieurs des revendications 1 à 4, caractérisés en ce que la somme p + q est un nombre entier de 5 à 15.

6. Polycondensats selon une ou plusieurs des revendications 1 à 5, caractérisés en ce qu'ils présentent des masses moléculaires de 2000 à 20000.

7. Procédé pour la préparation des polycondensats selon une ou plusieurs des revendications 1 à 6, caractérisé en ce que l'on met à réagir ensemble
a) un composé de formule générale IIa
R¹⁰OOC-R³-COOR¹⁰ (IIa)
dans laquelle R³ est défini comme indiqué à la revendication 1 et R¹⁰ représente un atome d'hydrogène, un groupe alkyle en C₁-C₄, un atome d'halogène, tel qu'en particulier le chlore, ou représente R¹⁰OOC-R³-CO-, et un composé de formule générale IIb
R¹¹OOC-R^{3'}-COOR¹¹ (IIb)
dans laquelle R^{3'} est défini comme indiqué à la revendication 1 et R¹¹ représente un atome d'hydrogène, un groupe alkyle en C₁-C₄, un atome d'halogène, tel qu'en particulier le chlore, ou représente R¹¹OOC-R^{3'}-CO-, et
b) un composé de formule générale IIIa 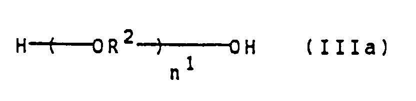 et/ou un composé de formule générale IIIb 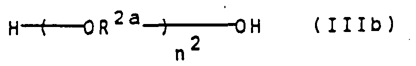 et/ou un composé de formule générale IIIc 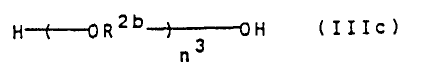 et/ou un composé de formule générale IIId 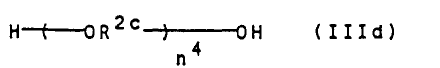 et/ou un composé de formule générale IIIe 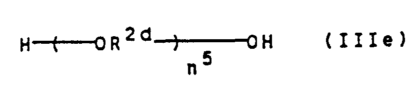 dans lesquelles R² à R^{2d} et n¹ à n⁵ sont définis comme indiqué à la revendication 1, et
c) un composé de formule générale IVa
R¹-OH (IVa)
dans laquelle R¹ est défini comme indiqué à la revendication 1, et un composé de formule générale IVb
R^{1'}-OH (IVb)
dans laquelle R^{1'} est défini comme indiqué à la revendication 1, et
d) un composé de formule générale (V) 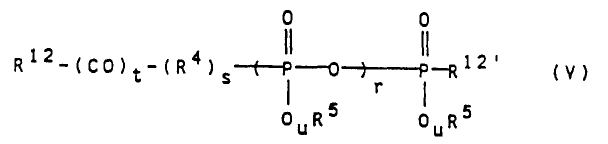 dans laquelle R⁴, R⁵, r, s, t et u sont définis comme indiqué à la revendication 1, et R¹² et R^{12'} représentent indépendamment l'un de l'autre un groupe hydroxy, alcoxy en C₁-C₄ ou un atome d'halogène, en particulier le chlore, et
un composé de formule générale VI 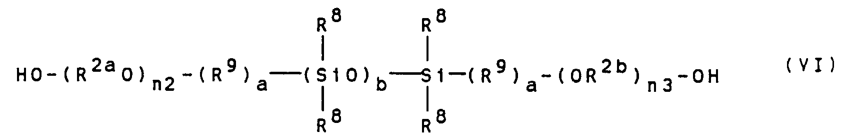 dans laquelle R^{2b}, R⁸, R⁹, n³, a et b sont définis comme indiqué à la revendication 1.

8. Procédé selon la revendication 7, caractérisé en ce que l'on utilise
a) les composés de formules IIa et IIb en quantités de 100% en mole au total,
b) les composés de formules IIa à IIIe en quantités de 150 à 250% en mole au total,
c) les composés de formules IVa et IVb en quantités de 20 à 40% en mole au total,
d) les composés de formules V et VI en quantités de 10 à 50% en mole au total.

9. Utilisation des polycondensats selon une ou plusieurs des revendications 1 à 6 pour l'apprêt textile de tissus de polyester.
